# EUROPEAN PATENT APPLICATION

(11) **EP 3 406 840 A1**
(43) Date of publication of application: **28.11.2018**
(21) Application number: 18275068.7
(22) Date of filing: 23.05.2018
(51) Int. Cl.: E06C 5/00, B60R 3/02, B60J 5/04

(54) **EMERGENCY STEPS FOR PASSENGER SERVICE VEHICLES**

(30) Priority: 24.05.2017 GB 201708334
(71) Applicant: Alexander Dennis Limited, Camelon, Falkirk FK1 4JB (GB)
(72) Inventor: ALLENBY, Chris, Camelon, Falkirk FK1 4JB (GB)
(74) Representative: Rankin, Douglas

(57) **Abstract**

An emergency door assembly for a passenger service vehicle and an associated passenger service vehicle having an emergency door assembly. The emergency door assembly includes a door leaf comprising a hinge for rotatable coupling to bodywork of the passenger service vehicle to allow hinged opening and closing of the door leaf, one or more steps coupled to the door leaf such that rotation of the door leaf on the hinge from a closed position to an open position causes rotation of the one or more steps from a stowed position to a deployed position. Optionally, the one or more steps are configured to enter a stowage aperture within the passenger service vehicle and below an internal floor of the passenger service vehicle when the door leaf is in the closed position.

## Description

### Technical Field

The invention relates to emergency steps for passenger service vehicles, for example buses and/or coaches. More specifically, the invention may relate to, but need not be limited to, emergency steps that are automatically deployed on opening of an emergency door of a passenger service vehicle.

### Background

Passenger service vehicles, such as buses and coaches, typically include an emergency door through which passengers can exit the vehicle. The emergency door is typically located rearward of a passenger door, which is the door through which passengers board and leave the vehicle during normal operation. In specific examples, the emergency door may be located at a mid or rear location on the vehicle and/or on an opposite side to the passenger door.

In some passenger service vehicles, the internal floor of the vehicle is raised above ground level to a degree that requires steps to aid a passenger in stepping down from the internal floor level to ground level. This may be the case, for example, in a coach where a volume is provided below the passenger seating area in which luggage may be stowed. In such vehicles, a set of steps is deployed on opening of the emergency door so that passengers may disembark via the emergency door.

Known systems for deployment of the steps comprise a sliding track arrangement housed within a cassette that may be fitted in a volume below the emergency door. The steps run on the sliding track and may be moved from a stowed position, wherein the steps are contained within the cassette, and a deployed position, in which the steps are slid outwards from the cassette such that then can be used by passengers disembarking from the vehicle via the emergency exit door. The steps are coupled to the emergency exit door, for example by a direct linkage, such that opening of the door on its hinge pulls the steps out from the stowed position to the deployed position.

Such step deployment systems are complicated, heavy and costly to assemble. They also require significant scheduled and unscheduled maintenance in order to ensure correct operation. Over time the steps may rattle during motion of the vehicle, which can be heard in the vehicle interior.

### Summary

According to an aspect of the invention, there is provided an emergency door assembly for a passenger service vehicle, the emergency door assembly comprising: a door leaf comprising a hinge for rotatable coupling to bodywork of the passenger service vehicle to allow hinged opening and closing of the door leaf; one or more steps coupled to the door leaf such that rotation of the door leaf on the hinge from a closed position to an open position causes rotation of the one or more steps from a stowed position to a deployed position.

Optionally, the one or more steps are configured to enter a stowage aperture within the passenger service vehicle and below an internal floor of the passenger service vehicle when the door leaf is in the closed position.

Optionally, a width of the one or more steps is less than a width of the stowage aperture to allow clearance between an edge of the one or more steps and an edge of the stowage aperture on rotation of the steps into the stowage aperture.

Optionally, one or more of the one or more steps is chamfered to allow clearance between an edge of the steps and an edge of the stowage aperture on rotation of the steps into the stowage aperture.

Optionally, the one or more steps are coupled to the door leaf such that they are fixedly aligned with the door leaf.

Optionally, the one or more steps are fixedly aligned with the door leaf such that a direction of extension of a tread of the one or more steps is substantially parallel to an inner face of the door leaf.

Optionally, the one or more steps are attached to an inner face of the door leaf.

Optionally, the emergency door assembly further comprises a load bearing member configured to engage with the bodywork of the passenger service vehicle when the steps are in the deployed position, such that a load placed on the steps is supported by the load bearing member and the bodywork.

Optionally, the load bearing member is coupled to a top tread of the one or more steps.

Optionally, the load bearing member comprises a step support flange configured to overlap a lip of the bodywork when the one or more steps are in the deployed position.

Optionally, the emergency door assembly further comprises a locking mechanism configured to lock the one or more steps in the deployed position.

Optionally, the locking mechanism is configured to engage with a corresponding feature of the bodywork when the door leaf reaches a predetermined angle relative to a longitudinal axis of the passenger service vehicle.

Optionally, the locking mechanism comprises a pin configured to engage with a corresponding aperture in the bodywork.

Optionally, the locking pin is biased in an extended position, and configured to engage a lead in flange to overcome the bias and retract the locking pin until the locking pin aligns with the aperture.

Optionally, the emergency door assembly further comprises a door frame, wherein the hinge is rotatably connected to the door frame, and wherein the door frame is configured to be attached to the bodywork of the passenger service vehicle.

According to an aspect of the invention, there is provided a passenger service vehicle comprising an emergency door assembly, the emergency door assembly comprising: a door leaf comprising a hinge, the hinge being rotatably coupled to bodywork of the passenger service vehicle to allow hinged opening and closing of the door leaf; one or more steps coupled to the door leaf such that rotation of the door leaf on the hinge from a closed position to an open position causes rotation of the one or more steps from a stowed position to a deployed position.

Optionally, the bodywork comprising a stowage aperture configured to receive the one or more steps therein when the door leaf is in the closed position.

Optionally, the passenger service vehicle further comprises a door aperture configured to receive the door leaf and through which a passenger may exit the passenger service vehicle when the door leaf is in the open position, wherein the stowage aperture is below the door aperture.

Optionally, the emergency door assembly further comprises a door frame attached to the bodywork, and wherein the door frame defines the door aperture and optionally the stowage aperture.

Optionally, the stowage aperture is below an internal floor level of the passenger service vehicle.

Optionally, a width of the one or more steps is less than a width of the stowage aperture to allow clearance between an edge of the steps and an edge of the stowage aperture on rotation of the steps into the stowage aperture.

Optionally, the width of the one or more steps results in a portion of the door aperture having no steps beneath it when the steps are in the deployed position, the passenger service vehicle further comprising a passenger obstruction partially obstructing the door aperture and configured to guide a passenger away from the portion of the door aperture having no steps beneath it.

Optionally, the door assembly further comprises a load bearing member configured to engage with the bodywork of the passenger service vehicle when the steps are in the deployed position, such that a load placed on the steps is supported by the load bearing member and the bodywork

Optionally, the bodywork comprises a lip and the load bearing member comprises a step support flange configured to overlap the lip when the one or more steps are in the deployed position.

Optionally, the emergency door assembly further comprises a locking mechanism configured to engage with a corresponding feature of the bodywork when the door leaf reaches a predetermined angle relative to a longitudinal axis of the passenger service vehicle.

Optionally, the locking mechanism comprises a pin and the corresponding feature of the bodywork comprises an aperture, the locking pin configured to enter the aperture.

Optionally, the locking pin is biased in an extended position, and further comprising a lead in flange on the bodywork configured to overcome the bias and retract the locking pin until the locking pin aligns with the aperture.

Optionally, the passenger service vehicle is a coach.

Optionally, the coach comprises a luggage stowage volume under an internal floor level of the coach.

The invention includes one or more corresponding aspects, embodiments or features in isolation or in various combinations whether or not specifically stated (including claimed) in that combination or in isolation. As will be appreciated, features associated with particular recited embodiments relating to systems may be equally appropriate as features of embodiments relating specifically to methods of operation or use, and vice versa.

It will be appreciated that one or more embodiments/aspects may be useful in reducing deployment time and costs of containerised generator systems.

The above summary is intended to be merely exemplary and non-limiting.

### Brief Description of the Figures

A description of exemplary methods and apparatus is now given, with reference to the accompanying drawings, in which:
Figure 1 is a partial section through an exemplary emergency door assembly of a passenger service vehicle in an open position;
Figure 2 is a partial front view of an exemplary emergency door assembly of a passenger service vehicle in an open position;
Figure 3 is a partial section through the an exemplary emergency door assembly of a passenger service vehicle showing a locking mechanism;
Figure 4 is a partial section through a set of emergency steps showing a load bearing member;
Figure 5 is a rear isometric view of a set of emergency steps; and
Figure 6 is a front view of an exemplary emergency door assembly of a passenger service vehicle in an open position.

### Detailed description

Generally, disclosed herein is an emergency door assembly for a passenger service vehicle that deploys one or more steps to allow passengers to disembark via the emergency door to ground level. The steps are coupled to the door such that they rotate between a stowed position and a deployed position on rotation of the emergency door between a closed position and an open position, respectively.

In a specific arrangement, steps as described herein are configured to be fixed to an internal face of a door leaf of the emergency door assembly. In such arrangements the steps are configured to enter an internal volume (e.g. a stowage volume or part of an engine compartment) of the vehicle beneath a floor of the vehicle interior. When the door leaf of the emergency door assembly is opened, the steps are deployed and can be used by passengers.

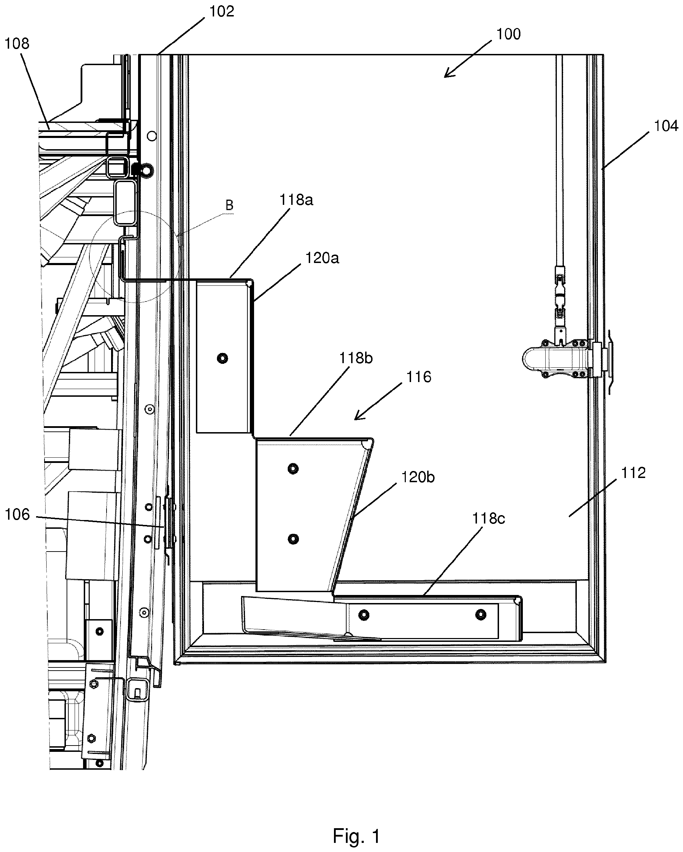

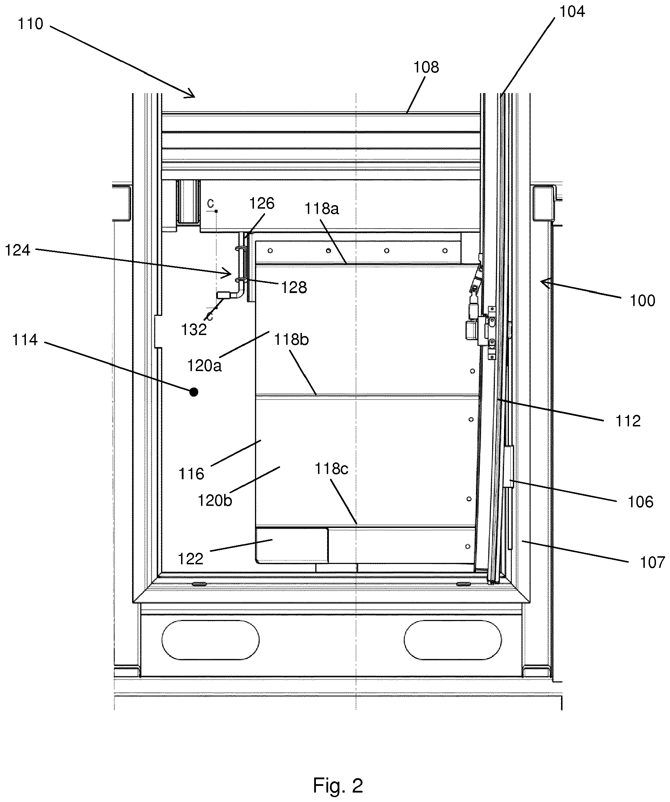

Referring to Figures 1 and 2, an emergency door assembly 100 is fitted to bodywork of a passenger service vehicle 102. Figure 1 is a section through Figure 2 shown by the line A-A. For clarity, Figures 1 and 2 show only the lower region of the emergency door assembly 100 and the skilled person will be aware of construction of the upper portion. The door assembly 100 comprises a door leaf 104 and a plurality of hinges 106. The hinges are configured to couple the door leaf 104 to the bodywork 102 and allow for outward opening of the door leaf 104. In some exemplary arrangements, the hinges 106 may be secured directly to the bodywork. In other exemplary arrangements, the emergency door assembly 100 may comprise a door frame 107 that at least partially defines a door aperture and receives the door leaf. The hinges 106 may have a hinged connection to the door frame 107. The door frame 107 may be secured to the bodywork of the passenger service vehicle 102.

An internal floor level 108 of the vehicle is shown in Figure 1. The internal floor level 108 marks a lower limit of a door aperture 110 within the bodywork 102 of the vehicle. Below the internal floor level 108 there may be a luggage volume for stowing luggage or any other suitable use. The luggage volume may mean that the internal floor level 108 is a sufficient distance above ground level that steps are required to allow passengers to disembark from the vehicle.

The door leaf 104 is larger than the door aperture 110 in that it comprises a lower portion 112 configured to cover a portion of the volume below the internal floor level 108. Specifically, the lower portion 112 of the door leaf 104 is configured to cover a stowage aperture 114 in which emergency steps 116 may be stowed and which is below the internal floor level 108. When the door leaf 104 is closed, the lower portion 112 thereof covers the stowage aperture 114. Some exemplary door assemblies may be configured to be fitted to a bus rearward of the rear axle and in such assemblies the portion of the volume below the floor level may be part of an engine compartment.

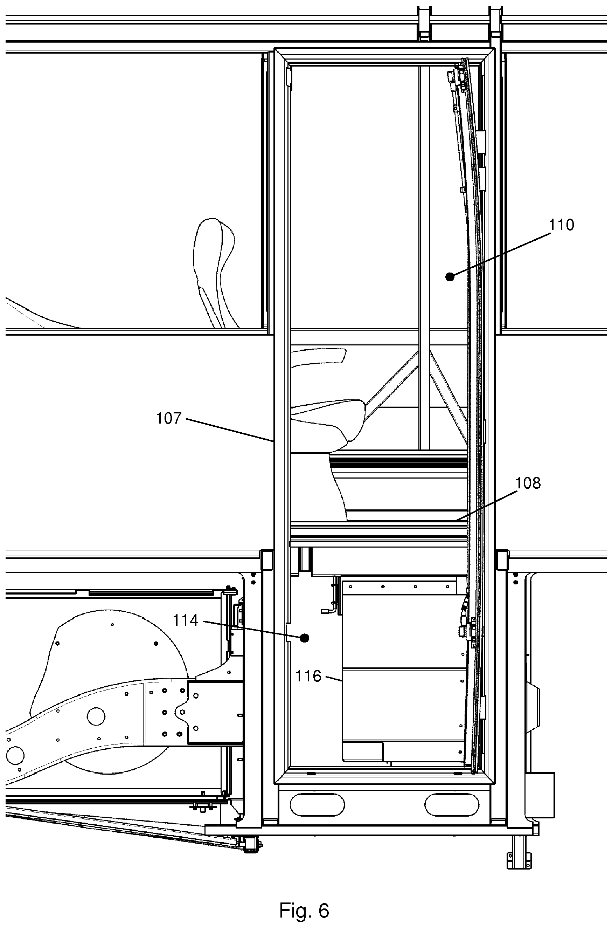

In door assemblies comprising a door frame 107, the door frame 107 defines, along with the internal floor 108, the door aperture and the stowage (or engine compartment) aperture. This is shown more clearly in Figure 6.

The emergency steps 116 are coupled to the lower portion 112 of the door leaf 104 such that they rotate on rotation of the door leaf 104 about the hinges 106. The emergency steps 116 may be fixed in relation to the door leaf 104 such that the angle of extension of a tread 118a-c of the emergency steps 116 is fixed in relation to an inner face of the door leaf 104. In one exemplary door assembly, the extension of the tread 118a-c may be substantially parallel to the inner face of the door leaf 104. Further, in exemplary door assemblies 100, the emergency steps 116 may be fixed to the inner face of the lower portion 112 of the door leaf 104 by any suitable fixing, such as a weld or a plurality of bolts. The treads 118a-c of the steps 116 may be connected by risers 120a-b. The risers 120a-b may be substantially vertical when coupled to the door assembly 100, or may be angled inwards, as with riser 120b, to increase the area of a lower tread 118c.

It is noted that the direction of extension of the tread 118a-c encompasses the direction of travel up or down the emergency steps 116.

As shown in Figures 2 and 6, the width of the steps 116 may be such that they only partially cover the width of the door aperture 110 and/or the width of the stowage aperture 114. That is, the width of the steps 116 is less than the width of the stowage aperture 114. This may be to allow sufficient clearance for the rotation of the steps 116 past an edge of the stowage aperture 114 when opening and closing the door assembly 100. A corner of the lower tread may be chamfered 122 for the same reason.

The steps 116 further comprise a locking mechanism 124 configured to secure the steps 116 in a deployed position. In some arrangements, the locking mechanism 124 may be configured to engage with a corresponding feature on the bodywork 102 at a predetermined point on the outward rotation of the steps 116 to prevent further rotation of the steps outwards and/or inwards.

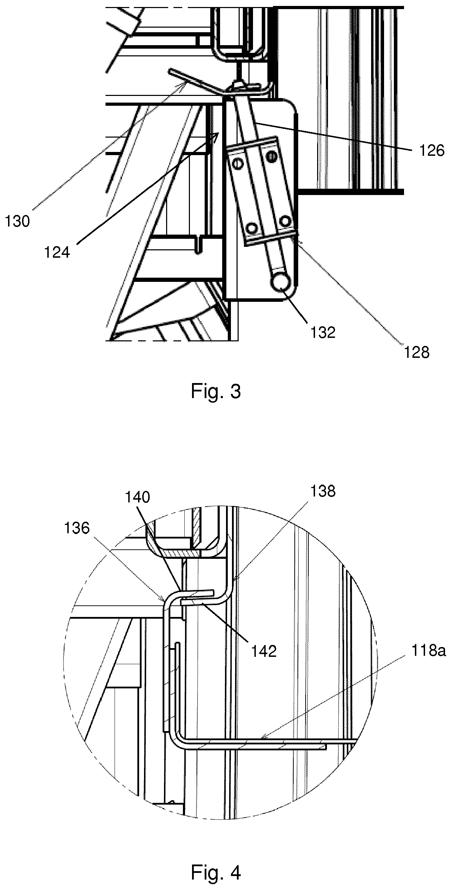

As shown in more detail in Figure 3, which is a section along line C-C in Figure 2, the locking mechanism 124 comprises a locking pin 126 held within a pin retainer 128. The pin retainer 128 is configured to hold the pin at an angle to the vertical to allow easier interaction with a lead in flange 130 during travel of the locking mechanism 124 relative to the bodywork 102. The locking pin 126 comprises a handle portion 132, which extends transverse to the longitudinal direction of the locking pin 126. The locking pin is biased into an extended position, for example by a compression spring (not shown). The lead in flange 130 has an angled surface that is configured to depress the locking pin 126 against the biasing force as it travels past the lead in flange 130. The lead in flange 130 also comprises an aperture (not shown) into which the locking pin 126 may enter. When the locking pin 126 is aligned with the aperture, it extends into the aperture under the biasing force and locks the steps 116 into the deployed position. In exemplary arrangements in which the steps 116 are fixed to an inner face of the lower portion 112 of the door leaf 104, the locking mechanism 124 also prevents further rotation of the door leaf 104. Over rotation of the door leaf 104 may also be prevented by one or more straps. In exemplary arrangements, the locking mechanism 124 is fixed to a side of the steps 116 distal to the inner face of the door leaf 104.

Figure 4 shows an enlarged area B of Figure 1. As can be seen, the steps 116 may also comprise a load bearing member 136 that is configured to interact with a portion 138 of the bodywork 102 for supporting the weight of passengers disembarking via the steps 116. The load bearing member 136 may comprise a step support flange 140 coupled to an upper tread 118a of the steps 116. The step support flange 140 is configured to rest on a lip 142 of the portion 138 of the bodywork 102.

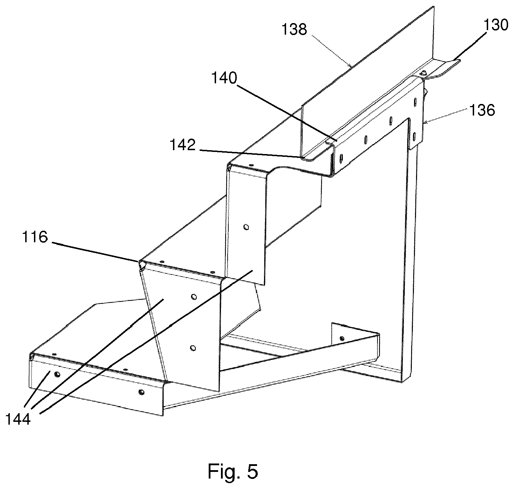

Figure 5 shows a rear isometric view of the steps 116. The steps 116 comprise a plurality of door attachment flanges 144. Coupling the steps 116 to the door assembly using these flanges 144 provides sufficient support to hold the steps 116 to the door leaf 104 during stowage. However, greater support may be required when a passenger places their weight on the steps 116. The load bearing member 136 is also shown in Figure 5, along with the portion 138 of the bodywork 102. Further, and as can be seen in Figure 5, the lead in flange 130 may be an extension of the lip 142.

The steps 116 are coupled to the door leaf 104 such that rotation of the door leaf 104 on the hinges 106 rotates the steps 116. The steps 116 may be fixed to an inner face of the door leaf 104 and extend in a downward direction from a hinged side to an opposite side of the door leaf 104. On closing the door assembly 100, the steps 116 rotate such that they enter the stowage aperture 114 underneath the internal floor 108 of the passenger service vehicle. Because the steps 116 are fixed to the door leaf 104, there is no requirement for extension of the steps 116 on a sliding track. The number of moving parts is reduced significantly, addressing a number of problems associated with known emergency step deployment apparatus.

Referring to Figure 6, in exemplary arrangements, the width of the steps 116 is less than the width of the door aperture 110 and the stowage aperture 114. Therefore, a region of the door aperture 110 does not have any portion the steps116 beneath it. In the exemplary apparatus shown in the figures, this is the portion of the door aperture 110 furthest from the hinges 106 and, in these examples, furthest rearward. A passenger obstruction 146, such as a seat, a guard rail or some other type of internal furniture, may be fitted in the interior of the passenger service vehicle to obstruct passengers from exiting the vehicle without steps beneath them. The passenger obstruction is configured to guide passengers towards the steps 116 and away from the region having no steps. The passenger obstruction may also be configured to act as a hand rail providing support for passengers disembarking via the steps.

The skilled person will be able to envisage further embodiments without departing from the scope of the appended claims.

## Claims

1. An emergency door assembly for a passenger service vehicle, the emergency door assembly comprising:
a door leaf comprising a hinge for rotatable coupling to bodywork of the passenger service vehicle to allow hinged opening and closing of the door leaf;
one or more steps coupled to the door leaf such that rotation of the door leaf on the hinge from a closed position to an open position causes rotation of the one or more steps from a stowed position to a deployed position.

2. An emergency door assembly according to claim 1, wherein the one or more steps are configured to enter a stowage aperture within the passenger service vehicle and below an internal floor of the passenger service vehicle when the door leaf is in the closed position.

3. An emergency door assembly according to claim 2, wherein:
a width of the one or more steps is less than a width of the stowage aperture to allow clearance between an edge of the one or more steps and an edge of the stowage aperture on rotation of the steps into the stowage aperture; and/or
one or more of the one or more steps is chamfered to allow clearance between an edge of the steps and an edge of the stowage aperture on rotation of the steps into the stowage aperture.

4. An emergency door assembly according to any preceding claim, wherein the one or more steps are coupled to the door leaf such that they are fixedly aligned with the door leaf; and optionally wherein:
the one or more steps are fixedly aligned with the door leaf such that a direction of extension of a tread of the one or more steps is substantially parallel to an inner face of the door leaf; and/or
the one or more steps are attached to an inner face of the door leaf.

5. An emergency door assembly according to any preceding claim, further comprising a load bearing member configured to engage with the bodywork of the passenger service vehicle when the steps are in the deployed position, such that a load placed on the steps is supported by the load bearing member and the bodywork; and optionally wherein:
the load bearing member is coupled to a top tread of the one or more steps; and/or
the load bearing member comprises a step support flange configured to overlap a lip of the bodywork when the one or more steps are in the deployed position.

6. An emergency door assembly according to any preceding claim, further comprising a locking mechanism configured to lock the one or more steps in the deployed position.

7. An emergency door assembly according to claim 6, wherein:
the locking mechanism is configured to engage with a corresponding feature of the bodywork when the door leaf reaches a predetermined angle relative to a longitudinal axis of the passenger service vehicle; and/or
the locking mechanism comprises a pin configured to engage with a corresponding aperture in the bodywork; and optionally the locking pin is biased in an extended position, and configured to engage a lead in flange to overcome the bias and retract the locking pin until the locking pin aligns with the aperture.

8. An emergency door assembly according to any preceding claim, further comprising a door frame, wherein the hinge is rotatably connected to the door frame, and wherein the door frame is configured to be attached to the bodywork of the passenger service vehicle.

9. A passenger service vehicle comprising an emergency door assembly, the emergency door assembly comprising:
a door leaf comprising a hinge, the hinge being rotatably coupled to bodywork of the passenger service vehicle to allow hinged opening and closing of the door leaf;
one or more steps coupled to the door leaf such that rotation of the door leaf on the hinge from a closed position to an open position causes rotation of the one or more steps from a stowed position to a deployed position.

10. A passenger service vehicle according to claim 9, the bodywork comprising a stowage aperture configured to receive the one or more steps therein when the door leaf is in the closed position; and optionally further comprising a door aperture configured to receive the door leaf and through which a passenger may exit the passenger service vehicle when the door leaf is in the open position, wherein the stowage aperture is below the door aperture; and further optionally wherein the emergency door assembly further comprises a door frame attached to the bodywork, and wherein the door frame defines the door aperture and optionally the stowage aperture.

11. A passenger service vehicle according to claim 10, wherein the stowage aperture is below an internal floor level of the passenger service vehicle.

12. A passenger service vehicle according to any of claims 10 or 11, wherein a width of the one or more steps is less than a width of the stowage aperture to allow clearance between an edge of the steps and an edge of the stowage aperture on rotation of the steps into the stowage aperture; and optionally the width of the one or more steps results in a portion of the door aperture having no steps beneath it when the steps are in the deployed position, the passenger service vehicle further comprising a passenger obstruction partially obstructing the door aperture and configured to guide a passenger away from the portion of the door aperture having no steps beneath it.

13. A passenger service vehicle according to any of claims 9 to 12, wherein the door assembly further comprises a load bearing member configured to engage with the bodywork of the passenger service vehicle when the steps are in the deployed position, such that a load placed on the steps is supported by the load bearing member and the bodywork; and optionally the bodywork comprises a lip and the load bearing member comprises a step support flange configured to overlap the lip when the one or more steps are in the deployed position.

14. A passenger service vehicle according to any of claims 9 to 13, the emergency door assembly further comprising a locking mechanism configured to engage with a corresponding feature of the bodywork when the door leaf reaches a predetermined angle relative to a longitudinal axis of the passenger service vehicle; and optionally the locking mechanism comprises a pin and the corresponding feature of the bodywork comprises an aperture, the locking pin configured to enter the aperture; and optionally the locking pin is biased in an extended position, and further comprising a lead in flange on the bodywork configured to overcome the bias and retract the locking pin until the locking pin aligns with the aperture.

15. A passenger service vehicle according to any of claims 9 to 14, wherein the vehicle is a coach; and optionally the coach comprises a luggage stowage volume under an internal floor level of the coach.
